# EUROPEAN PATENT APPLICATION

(11) **EP 4 845 046 A1**
(43) Date of publication of application: **25.11.2026**
(21) Application number: 25732659.5
(22) Date of filing: 08.01.2025
(51) Int. Cl.: H04B 7/06, H04W 24/10, H04W 24/08, H04J 11/00, H04B 7/0408, H04L 5/00

(54) **METHOD PERFORMED BY TERMINAL OR BASE STATION IN WIRELESS COMMUNICATION SYSTEM, AND DEVICE THEREFOR**

(30) Priority: 17.01.2024 US 202463621591 P
(71) Applicant: LG ELECTRONICS, INC., Seoul 07336 (KR)
(72) Inventor: CHUNG, Jaehoon, Seocho-gu Seoul 06772 (KR); KIM Hyungtae, Seocho-gu Seoul 06772 (KR); YANG, Suckchel, Seocho-gu Seoul 06772 (KR); KANG, Jiwon, Seocho-gu Seoul 06772 (KR); GO, Seongwon, Seocho-gu Seoul 06772 (KR)
(74) Representative: Frenkel, Matthias Alexander
(86) International application number: PCT/KR2025/000398
(87) International publication number: WO 2025/155024

(57) **Abstract**

A method performed by a user equipment (UE) according to at least one of the embodiments disclosed in the present disclosure includes: determining preference/non-preference of the UE for a plurality of physical cell identifiers (PCIs); measuring M beams for each PCI based on the preferred PCIs of the UE; and transmitting a UE-initiated beam measurement report for inter-cell beam management (ICBM) based on the measurement. The UE-initiated beam measurement report may be configured to include: measurement values of at least N beams among the M beams measured for each PCI; and reference signal identification information for the at least N beams.

## Description

### TECHNICAL FIELD

The present disclosure relates to a wireless communication system, and more specifically, to a method for a terminal or a base station to transmit or receive an uplink/downlink wireless signal in a wireless communication system and an apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In the existing New Radio (NR) standard, it is defined that a base station (BS) provides configuration information on beam measurement/reporting to a user equipment (UE) for beam management. Such configuration information explicitly indicates beams that the UE needs to measure/report.

Depending on the channel environment, for example, in an environment where the UE has high mobility, the UE needs to frequently perform beam measurement reporting to find the optimal beam. In this case, issues such as reference signal overhead, UE measurement/reporting overhead, and increased power consumption arise.

### DISCLOSURE

### TECHNICAL PROBLEM

The present disclosure aims to provide a method for efficiently performing a wireless signal transmission and reception process and device therefor. For example, a method for more efficiently transmitting and receiving beam measurement reports between a user equipment (UE) and a base station (BS) through a UE-initiated measurement report and device therefor may be provided.

Other technical objects may be inferred from the detailed description.

### TECHNICAL SOLUTION

In an aspect of the present disclosure, provided herein is a method performed by a user equipment (UE). The method includes: determining preference/non-preference of the UE for a plurality of physical cell identifiers (PCIs); measuring M beams for each PCI based on preferred PCIs of the UE; and transmitting a UE-initiated beam measurement report for inter-cell beam management (ICBM) based on the measurement. The UE-initiated beam measurement report may be configured to include: measurement values of at least N beams among the M beams measured for each PCI; and reference signal identification information for the at least N beams.

The number of preferred PCIs is L, and at least a part of a total of L * M measurement values may be omitted in the UE-initiated beam measurement report.

The measurement values of the at least N beams for each PCI may not be omitted and may be always included in the UE-initiated beam measurement report.

A sorting order of the measurement values of the at least N beams for each PCI in the UE-initiated beam measurement report may be determined based on an average or maximum value of measurement values of the M beams for each PCI.

The UE-initiated beam measurement report may be configured based on a plurality of {measurement value, RS ID information} pairs.

Among the plurality of {measurement value, RS ID information} pairs, measurement values included in at least one first {measurement value, RS ID information} pair may be encoded as absolute values, and measurement values included in at least one second {measurement value, RS ID information} pair may be encoded as differential values relative to the absolute values.

The measurement values encoded as the absolute values may include a highest measurement value for each PCI.

X bits may be assigned to each absolute value, and Y bits may be assigned to each differential value, where Y may be smaller than X.

The UE-initiated beam measurement report may include information regarding which PCI is related to each absolute value
The UE may transmit information regarding the preference/non-preference of the UE determined for the plurality of PCIs.

In another aspect of the present disclosure, provided herein is a non-transitory computer-readable recording medium having recorded thereon a program for executing the above-described method.

In another aspect of the present disclosure, provided herein is a device including: a memory configured to store instructions; and a processor configured to perform operations by executing the instructions. The operations may include: determining preference/non-preference of the device for a plurality of PCIs; measuring M beams for each PCI based on the preferred PCIs of the device; and transmitting a device-initiated beam measurement report for ICBM based on the measurement. The device-initiated beam measurement report may be configured to include: measurement values of at least N beams among the M beams measured for each PCI; and reference signal identification information for the at least N beams.

The device may further include a transceiver configured to transmit or receive wireless signals under control of the processor.

The device may be a UE in a wireless communication system.

The device may be a processing device configured to control a UE in a wireless communication system.

In another aspect of the present disclosure, provided herein is a base station (BS). The BS performs operations including: acquiring information regarding preference/non-preference of a UE for a plurality of PCIs; transmitting M beams for each PCI based on preferred PCIs of the UE; and receiving a UE-initiated beam measurement report for ICBM from the UE. The UE-initiated beam measurement report may include: measurement values of at least N beams among the M beams measured for each PCI; and reference signal identification information for the at least N beams.

In a further aspect of the present disclosure, provided herein is a BS. The BS includes: at least one memory configured to store instructions; and at least one processor configured to perform operations by executing the instructions. The operations of the at least one processor include: acquiring information regarding preference/non-preference of a UE for a plurality of PCIs; transmitting M beams for each PCI based on preferred PCIs of the UE; and receiving a UE-initiated beam measurement report for ICBM from the UE. The UE-initiated beam measurement report may include: measurement values of at least N beams among the M beams measured for each PCI; and reference signal identification information for the at least N beams.

### ADVANTAGEOUS EFFECTS

According to the disclosure, wireless signal transmission and reception can be efficiently performed in a wireless communication system. For example, a user equipment (UE) may provide information about preferred/non-preferred cells of the UE and information about related reference signal resource sets to a network through a UE-initiated inter-cell beam management (ICBM) beam report, thereby allowing the UE and network to operate more efficiently.

Other technical effects may be inferred from the detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink shared channel (PDSCH) and ACK/NACK transmission and reception process.
FIG. 6 illustrates an exemplary physical uplink shared channel (PUSCH) transmission process.
FIG. 7 shows an example of a CSI related procedure.
FIGS. 8 to 10 are diagrams for explaining encoding of beam measurement values according to embodiments.
FIGS. 11 to 14 are diagrams for explaining sorting of report contents within a beam measurement report according to embodiments.
FIG. 15 illustrates a flow of a method performed by a user equipment (UE) according to an embodiment.
FIG. 16 illustrates a flow of a method performed by a base station (BS) according to an embodiment.
FIGS. 17 to 20 illustrate an example of a communication system 1 and wireless devices applied to the disclosure.

### DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

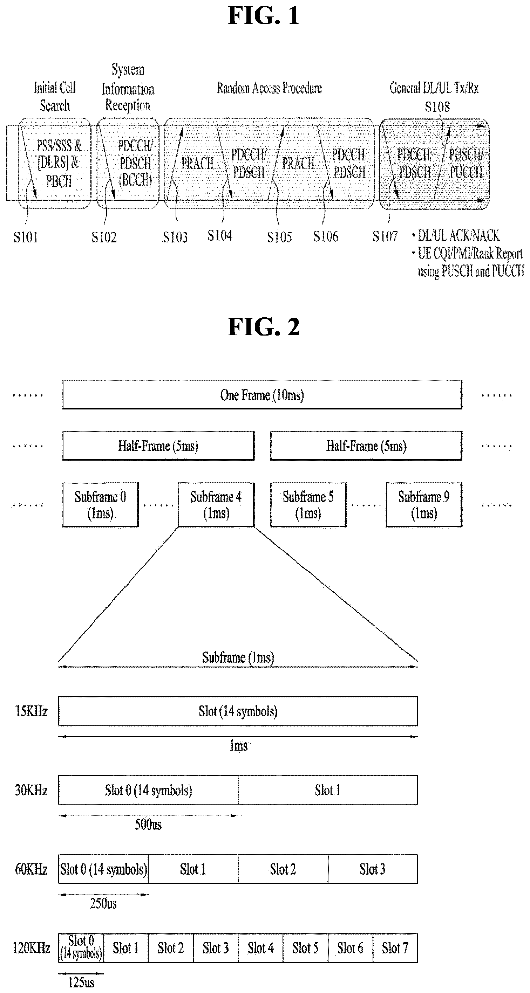

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

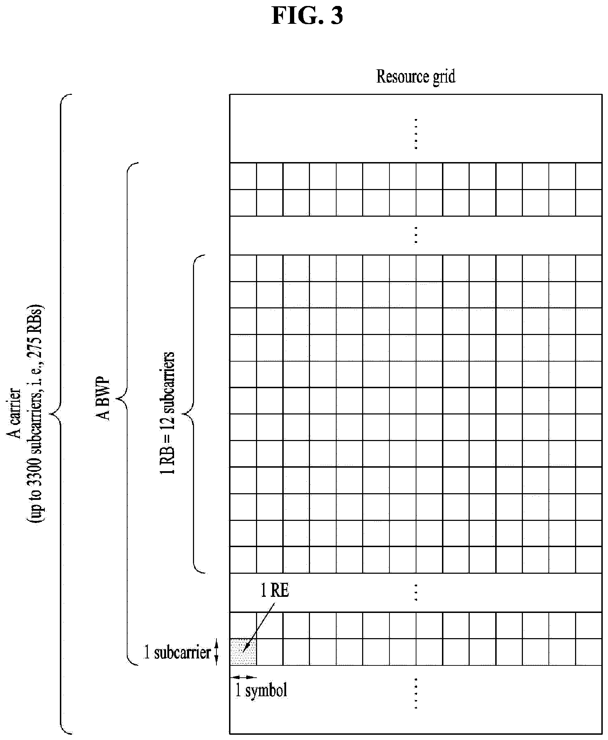

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

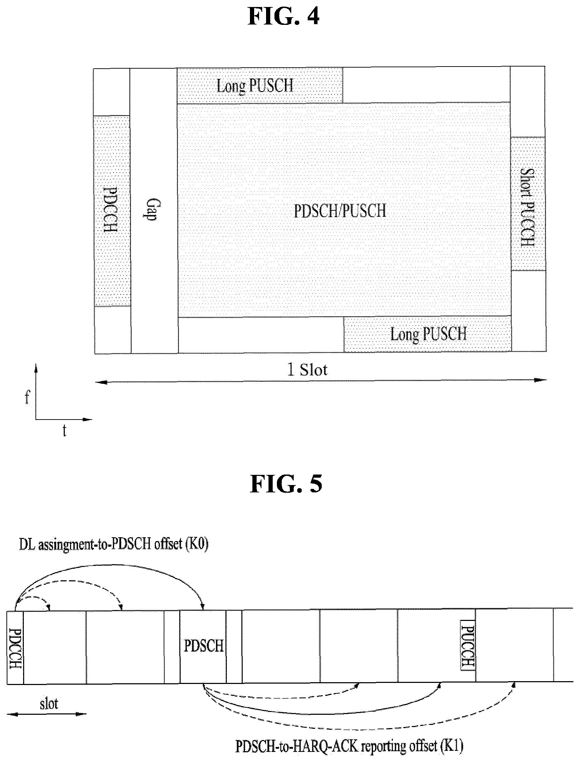

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols ${N}_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

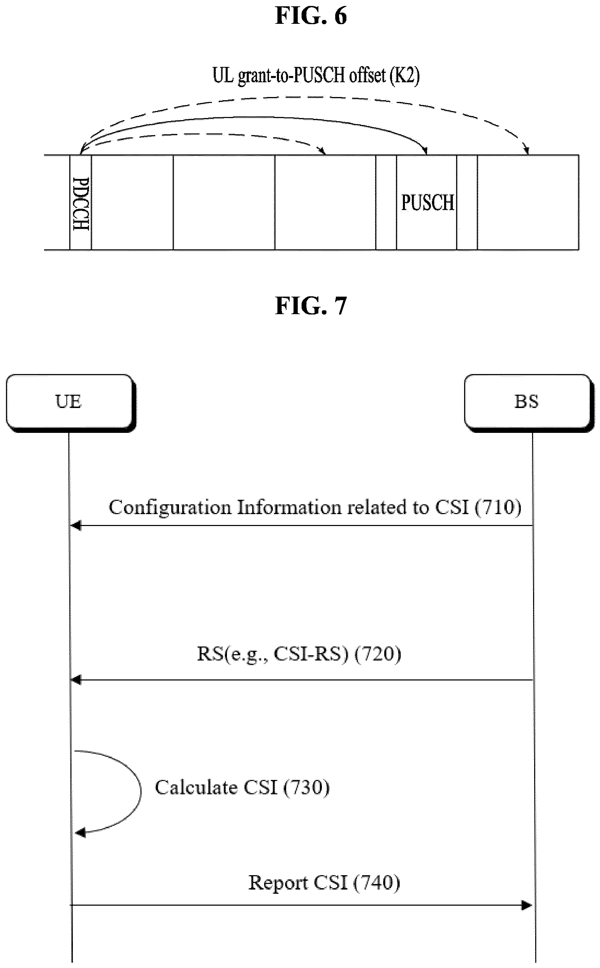

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semipersistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semipersistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semipersistent or aperiodic. The periodic CSI report may be transmitted on a PUCCH. The semipersistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP(semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

### Beam Management (BM)

A BM procedure refers to Layer1/Layer2 (L1/L2) procedures for acquiring and maintaining a set of beams of a BS (e.g., gNB, TRP, etc.) and/or UE that is capable of being used for downlink (DL) and uplink (UL) transmission/reception. The BM procedure may include the following procedures and terms.
- Beam measurement: An operation in which the BS or UE measures the characteristics of a received beamforming signal.
- Beam determination: An operation in which the BS or UE selects the transmission/reception (Tx/Rx) beam thereof.
- Beam sweeping: An operation in which Tx and/or Rx beams are used to cover a spatial area over a specific time period in a predetermined manner.
- Beam report: An operation in which the UE reports information about a beamformed signal based on beam measurement.

The BM procedure may be divided into (1) a DL BM procedure using a synchronization signal)/physical broadcast channel (SS/PBCH) block or a CSI-RS, and (2) a UL BM procedure using a sounding reference signal (SRS).

Additionally, each BM procedure may include Tx beam sweeping to determine the Tx beam and Rx beam sweeping to determine the Rx beam.

### DL BM

The DL BM procedure may include transmission of beamformed DL RSs (e.g., CSI-RS or SS block (SSB)) by the BS and beam reporting by the UE.

Here, beam reporting may include preferred DL RS ID(s) and corresponding L1 reference signal received power (L1-RSRP)

The DL RS ID may be an SSB resource indicator (SSBRI) or CSI-RS resource indicator (CRI).

SSB beams and CSI-RS beams may be used for beam measurement. The measurement metric is L1-RSRP per resource/block. An SSB is used for coarse beam measurement, while a CSI-RS may be used for fine beam measurement. The SSB may be used for both Tx beam sweeping and Rx beam sweeping.

### (1) SSB beam

Rx beam sweeping based on an SSB may be performed across multiple SSB bursts. That is, Rx beam sweeping may be performed as the UE changes the Rx beam for the same SSBRI. Here, one SS burst includes one or more SSBs, and one SS burst set includes one or more SSB bursts.

Beam reporting based on an SSB is configured during a CSI/beam configuration in the RRC connected state (or RRC connected mode). The UE receives a CSI-ResourceConfig information element (IE), which includes CSI-SSB-ResourceSetList containing SSB resources used for BM, from the BS.

### (2) CSI-RS beam

The purpose of a CSI-RS will be described. i) If a repetition parameter is configured for a specific CSI-RS resource set and trs-Info is not configured, the CSI-RS is used for BM. ii) If the repetition parameter is not configured and trs-Info is configured, the CSI-RS is used for a tracking reference signal (TRS). iii) If neither the repetition parameter nor trs-Info is configured, the CSI-RS is used for CSI acquisition.

The repetition parameter may only be configured for CSI-RS resource sets that are associated with CSI-ReportConfig where reporting is set to L1 RSRP or 'No Report (or None)'.

If the UE is configured with CSI-ReportConfig where reportQuantity is set to 'cri-RSRP', 'cri-SINR', or 'none', and if CSI-ResourceConfig for channel measurement (higher layer parameter resourcesForChannelMeasurement) does not include the higher layer parameter 'trs-Info' and includes NZP-CSI-RS-ResourceSet where the higher layer parameter 'repetition' is configured, the UE may only be configured with the same number of ports (1-port or 2-port) for all CSI-RS resources within NZP-CSI-RS-ResourceSet, as indicated by the higher layer parameter 'nrofPorts'.

When the higher layer parameter repetition is set to 'ON', it is related to the Rx beam sweeping procedure of the UE. In this case, if the UE is configured with NZP-CSI-RS-ResourceSet where repetition is set to 'ON', the UE may assume that at least one CSI-RS resource within NZP-CSI-RS-ResourceSet is transmitted with the same DL spatial domain transmission filter. That is, the at least one CSI-RS resource within NZP-CSI-RS-ResourceSet is transmitted through the same Tx beam. Here, the at least one CSI-RS resource within the NZP-CSI-RS-ResourceSet may be transmitted in different OFDM symbols. Additionally, the UE is not expected to have different periodicities in periodicityAndOffset for all CSI-RS resources within NZP-CSI-RS-ResourceSet.

On the other hand, when repetition is set to 'OFF', it is related to the Tx beam sweeping procedure of the BS. In this case, when repetition is set to 'OFF', the UE does not assume that at least one CSI-RS resource within NZP-CSI-RS-ResourceSet is transmitted with the same DL spatial domain transmission filter. That is, the at least one CSI-RS resource within NZP-CSI-RS-ResourceSet is transmitted through different Tx beams.
- The UE receives an NZP CSI-RS resource set IE containing the higher layer parameter repetition from the BS via RRC signaling. Here, the repetition parameter is set to 'ON'.
- The UE receives CSI-RS resource(s) within a NZP CSI-RS resource set, where repetition is set to 'ON', repeatedly in different OFDM symbols through the same Tx beam (or DL spatial domain transmission filter) of the BS.
- The UE determines the Rx beam thereof.
- The UE omits a CSI report. In this case, reportQuantity in the CSI report configuration may be set to 'No report (or None)'.

That is, the UE may omit the CSI report when repetition is set to 'ON'.

### DL BM related beam indication

The UE may receive a list of up to M candidate transmission configuration indication (TCI) states for the purpose of at least quasi co-location (QCL) indication through an RRC configuration. Here, M may vary depending on the capability of the UE. For example, M may be 64.

Each TCI state may be configured with a single RS set. For at least the spatial QCL purpose (QCL Type D) within the RS set, each DL RS ID may refer to one of the DL RS types, such as an SSB, P-CSI RS, SP-CSI RS, or A-CSI RS.

The initialization/update of DL RS ID(s) within the RS set used for at least the spatial QCL purpose may be performed through at least explicit signaling.

### Rel-16/17 enhancement

In Rel-16, enhancements were made not only for beam/PL RS indication but also for beam reporting. In Rel-15, a mode in which the UE measures/reports L1-RSRP for each beam RS is supported. However, in environments with significant interference between beams, the high L1-RSRP (received signal strength) of a specific beam RS does not guarantee that the corresponding RS may have superior quality as the serving beam. In other words, the UE may select a beam with large received signal strength but also significant beam interference and report the beam to the BS. To overcome such a limitation, Rel-16 supports a new beam reporting mode where the BS configures not only an RS for channel measurement but also resources for interference measurement, and the UE measures the L1-SINR for both the channel and interference resources and reports a few RSs with high L1-SINR values.

In Rel-16, various BM enhancements were made. In particular, features that significantly reduce signaling overhead and latency related to beam indication methods were introduced. However, for a UE operating with a single serving beam, beams were not configured/indicated integrally across channels/RSs. Based on this motivation, methods for configuring/indicating beams integrally across channels/RS were standardized in Rel-17. In NR, DL beams are indicated through a transmit configuration indicator (TCI), which is referred to as a unified TCI state. While the existing TCI state is configured/indicated separately for each DL RS/channel, the unified TCI state is configured/indicated integrally. By default, a DL unified TCI state indicates a QCL type-D RS that is integrally applied to (some) PDCCHs, (some) PDSCHs, and (some) CSI-RS resources. A UL unified TCI state indicates a spatial relation RS (and PL RS) that is integrally applied to (some) PUCCHs, (some) PUSCHs, and (some) SRS resources. Additionally, similar to the default spatial relation/PL RS feature in Rel-16, a UL spatial relation and PL RS may be aligned with a DL beam RS for a UE where beam correspondence is established. Thus, channels/RS for which the unified TCI state is applied may encompass both DL and UL channels/RS. This is called a joint DL/UL TCI state. In other words, the following two modes are supported.
- Joint DL/UL TCI Configuration/Indication Mode: The DL RS configured/indicated as a joint TCI state is applied not only as a QCL type-D source RS for DL channels/RSs but also as a spatial relation RS (and PL RS) for UL channels/RSs. In other words, when the joint TCI state is updated and indicated, beam RSs (and PL RSs) for each of the corresponding DL channels/RSs and UL channels/RSs are changed together.
- Separate DL and UL TCI Configuration/Indication Mode: The QCL type-D source RS for DL channels/RSs is configured/indicated as a DL TCI state, while the spatial relation RS (and PL RS) for UL channels/RSs is configured/indicated as a UL TCI state. Here, the DL TCI state and UL TCI state are configured/indicated separately.

The DL/UL/joint TCI state is expected to be indicated/updated through a MAC-CE and/or DCI. More specifically, among multiple TCI states configured via RRC (referred to as a TCI state pool), one or more TCI states are activated through a MAC-CE. If multiple TCI states are activated via a MAC-CE, one of the TCI states is indicated through DCI. The DCI indication is expected to be supported through a DL DCI format (DCI1-1/1-2) that supports the TCI field, and the DCI indication may be supported not only when PDSCH scheduling is accompanied but also when the PDSCH scheduling is not accompanied. In the latter case, since the PDSCH scheduling is omitted (similar to DCI-based semi-persistent scheduling (SPS) release), the transmission of an ACK by the UE for the corresponding DCI may be supported.

The Rel-17 beam report mode may support a mode in which the UE measures/reports the optimal beam RS for each TRP in a MTRP environment. To this end, the BS may configure a beam measurement RS set/group into two subsets/sub-groups, and the UE may select RS(s) for each subset/sub-group and report the quality values (L1-RSRP, [L1-SINR]) of the corresponding RS(s).

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

In relation to the PDCCH/PDSCH QCL, a plurality of transmission configuration indication (TCI) states may be configured in the UE through higher layer signaling. Up to 64 TCI states may be RRC configured for the PDCCH QCL, and up to 128 TCI states may be RRC configured for the PDSCH QCL. In the case of PDSCH QCL, a list for configuring a plurality of TCI-states may be provided through a higher layer parameter PDSCH-Config.

Each TCI-state is related with one or two DL RSs and a QCL configuration parameter between DM-RS ports of the PDSCH/PDSCH. The QCL configuration parameter may include qcl-Type1 for a first DL RS and qcl-Type2 for a second DL RS. A QCL type may correspond to one of the following:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

TCI states configured through RRC signaling are deactivated by default.

In the case of PDSCH QCL, up to 8 TCI states from among RRC configured TCI states may be activated through a MAC CE. A TCI field included in DCI that schedules the PDSCH may indicate one of the activated TCI states (e.g., when provision of a TCI field to the corresponding DCI is activated by RRC signaling), and the UE may receive the PDSCH based on QCL information corresponding to the indicated TCI state.

In the case of PDCCH QCL, up to TCI state from among RRC configured TCI states may be activated for the corresponding CORESET through the MAC CE. To receive the PDCCH in the corresponding CORESET, the UE may receive the PDCCH based on QCL information corresponding to the activated TCI state.

### Multiple-transmission/reception point (M-TRP)-related operation

The M-TRP transmission method, in which M TRPs transmit data to one UE, is largely divided into two types: eMBB M-TRP transmission, which is a method to increase a transmission rate, and URLLC M-TRP transmission, which is a method to increase a reception success rate and reduce latency.

The DL M-TRP URLLC transmission method refers to a method in which multiple TPRs transmit the same data/DCI by using different space (e.g., layer/port)/time/frequency resource. For example, TRP 1 may transmit specific data/DCI on resource 1, and TRP 2 may transmit the specific data/DCI (i.e., the same data/DCI) on resource 2.

That is, when the DL M-TRP URLLC transmission method is configured, the UE may receive the same data/DCI by using different spaces/times/frequency resources. In this case, the UE may receive an instruction about a QCL RS/type (i.e., DL TCI state) used in the space/time/frequency resource for receiving the data/DCI, from a BS.

For example, when the corresponding data/DCI is received from resource 1 and resource 2, the UE may receive the instruction about the DL TCI state used in resource 1 and the DL TCI state used in resource 2, from the BS. High reliability may be obtained by receiving the corresponding data/DCI through resource 1 and resource 2. This M-TRP URLLC transmission method may be applied to PDSCH/PDCCH.

The UL M-TRP URLLC transmission method refers to a method in which multiple TRPs receive the same data/UCI from one UE by using different spaces/times/frequency resources. For example, TRP 1 may receive the same data/UCI from the UE on resource 1, and TRP 2 may receive the same data/UCI from the UE on resource 2. The TRP 1 and the TRP 2 may share data/UCI received from the UE through a backhaul link (connected between TRPs).

That is, when the UL M-TRP URLLC transmission method is configured, the UE may transmit the same data/DCI by using different spaces/times/frequency resources. In this case, the UE may receive an instruction about Tx beams and Tx power (i.e., UL TCI state) used in the space/time/frequency resource for transmitting the same data/DCI, from the BS. For example, when the same data/DCI is transmitted from resource 1 and resource 2, the UE may receive the instruction about the UL TCI state used in resource 1 and the UL TCI state used in resource 2, from the BS. This UL M-TRP URLLC may be applied to PUSCH/PUCCH.

In terms of DCI transmission, the M-TRP transmission method may be divided into i) a multiple DCI (M-DCI)-based M-TRP transmission method in which each TRP transmits different DCIs, and ii) a single-DCI (S-DCI)-based M-TRP transmission method in which one TRP transmits DCI. For example, in the case of S-DCI, all scheduling information about data transmitted by the M-TRP needs to be transmitted through one DCI, and thus may be used in an ideal backhaul (BH) environment in which dynamic cooperation between two TRPs is possible.

In relation to M-TRP transmission and reception in Rel-16 NR standardization, PDSCH transmission and reception according to the S-DCI-based M-TRP transmission method and the M-DCI-based M-TRP transmission method are supported.

First, the S-DCI-based M-TRP PDSCH transmission method will be described.

For S-DCI-based M-TRP PDSCH transmission, one of SDM/FDM/TDM methods may be used. In the case of SDM, the BS transmits one TB by using multi-layers, but transmits layers belonging to different DMRS CDM groups through different transmission beams (Tx beams) (i.e. QCL RS or TCI state). As such, transmission capacity may be improved by increasing the number of layers compared to the existing S-TRP transmission method. When one TB is transmitted using multiple layers, some layers may be transmitted to the TRP 1 and the other layers may be transmitted to the TRP 2, thereby improving channel reliability due to diversity gain.

For FDM, two schemes, schemes 2a and 2b, are supported. Here, the scheme 2a is a method of transmitting one TB to a multi-RB but transmitting RBs belonging to different RB groups by using different Tx beams (i.e., QCL RS or TCI state). The scheme 2b is a method of transmitting the same TB to different RB groups but transmitting RBs belonging to different RB groups by using different Tx beams (i.e., QCL RS or TCI state). For TDM, two schemes, schemes 3 and 4, are supported. Here, the scheme 4 (i.e., inter-slot TDM) is a method of transmitting the same TB repeatedly in multiple slots but transmitting slots belonging to different slot groups with different Tx beams (i.e., QCL RS or TCI state). In contrast, the scheme 3 (i.e., intra-slot TDM) is a method of repeatedly transmitting the same TB in several OFDM symbol groups but transmitting some OFDM symbol groups and the other OFDM symbol groups with different Tx beams (i.e., QCL RS or TCI state).

Hereinafter, the M-DCI-based M-TRP PDSCH transmission method will be described.

The M-DCI based M-TRP (or MTRP) PDSCH transmission is a method of scheduling and transmitting the PDSCH through DCI by each TRP. That is, the TRP 1 transmits PDSCH 1 through DCI 1, and TRP 2 transmits PDSCH 2 through DCI 2. When the PDSCH 1 and the PDSCH 2 overlap each other on the same frequency time resource, two PDSCHs are received for the same RE, thereby increasing resource efficiency and increasing transmission capacity. To this end, the concept of CORESET pool, which refers to a group of several CORESETs, is introduced. For example, the TRP 1 transmits a PDCCH through CORESET belonging to CORESET pool 0 and also transmits a PDSCH scheduled by the corresponding PDCCH. The TRP 2 transmits a PDCCH through CORESET belonging to CORESET pool 1 and also transmits a PDSCH scheduled by the corresponding PDCCH.

Even in the case of PUSCH, a specific TRP may schedule PUSCH transmission to the UE through CORESET belonging to each COERSET pool. For example, some PUCCH resources may be scheduled by the TRP 1, and the other PUCCH resources may be scheduled by the TRP 2. The UE may transmit independent PUSCH/PUCCH for each of the TRP 1 and the TRP 2.

The UE may recognize a PUSCH (or PUCCH) scheduled by the DCI received based on different CORESETs (or CORESETs belonging to different CORESET groups) as a PUSCH (or PUCCH) transmitted to different TRPs or as PUSCHs (or PUCCHs) of different TRPs. A method for UL transmission (e.g., PUSCH/PUCCH) transmitted to different TRPs may be equally applied to UL transmission to different panels belonging to the same TRP.

Hereinafter, a CORESET group ID (or COERSET pool index with the same meaning) may mean index/identification information (e.g., ID) to distinguish CORESETs for each TRP/panel. A CORESET group may mean a group/union of CORESETs distinguished by index/identification information (e.g., ID)/CORESET group ID, and the like to distinguish CORESETs for each TRP/panel. For example, the CORESET group ID may be specific index information defined within CORESET configuration. In other words, the CORESET group may be configured/indicated/defined by an index defined within the CORESET configuration for each CORESET. And/or, the CORESET group ID may mean an index/identification information/indicator, or the like for distinction/identification between CORESETs configured/related to each TRP/panel.

Hereinafter, the CORESET group ID may be replaced and expressed as a specific index/specific identification information/specific indicator for distinction/identification between CORESETs configured/related to each TRP/panel. The corresponding information may be configured/indicated through higher layer signaling (e.g., RRC signaling or MAC-CE) and/or physical layer signaling (e.g., DCI). For example, PDCCH detection for each TRP/panel may be configured/instructed to be performed on a CORESET group basis, and UCI (e.g., CSI, HARQ-ACK/NACK, or SR) for each TRP/panel and/or a UL physical channel resource (e.g., PUCCH/PRACH/SRS resources) may be configured/instructed to be managed/controlled separately on a CORESET group basis. And/or, HARQ ACK/NACK (process/retransmission) for PDSCH/PUSCH, or the like scheduled for each TRP/panel on a CORESET group basis may be managed.

For example, a higher layer parameter ControlResourceSet IE (information element) may include CORESET-related ID (e.g., controlResourceSetID)/CORESET pool index for CORESET (e.g., CORESETPoolIndex)/time/frequency resource configuration of CORESET/TCI information related to CORESET. For example, the index of the CORESET pool (e.g., CORESETPoolIndex) may be configured to 0 or 1. In the description described above in the disclosure, the CORESET group may correspond to the CORESET pool, and the CORESET group ID may correspond to the CORESET pool index (e.g., CORESETPoolIndex).

With regard to M-TRP transmission and reception in Rel-17 NR standardization, M-TRP PDCCH/PDSCH SFN transmission, S-DCI-based M-TRP PUSCH repeated transmission, and single PUCCH resource-based M-TRP PUCCH repeated transmission are supported. In the corresponding transmission schemes, the same content (i.e., DCI/UL TB/UCI) is transmitted repeatedly by improving the URLLC target to increase reliability. Here, the M-TRP PDCCH repeated transmission is performed based on TDM or FDM, the M-TRP PDCCH/PDSCH SFN transmission is performed in the same time/frequency/layer, the S-DCI-based M-TRP PUSCH repeated transmission is performed based on TDM, and the single PUCCH resource-based M-TRP PUCCH repeated transmission is performed based on TDM.

First, the S-DCI-based M-TRP PDCCH repeated transmission method will be described.

In NR Rel-17 standardization, a plurality of CORESETs with different TCI states (i.e., different QCL RSs) are configured for the UE for M-TRP PDCCH repeated transmission, and a plurality of search space (SS) set that are each connected to the corresponding CORESETs are configured. The BS may instruct/configure to the UE that the SS set connected to one CORESET and the SS set connected to another CORESET are linked with each other for repeated transmission. As such, the UE may know that PDCCH candidates of the corresponding SS set are transmitted repeatedly.

For example, two CORESETs, CORESET 0 and CORESET 1, may be configured to the UE, CORESET 0 and CORESET 1 may be connected to SS set 0 and SS set 1, respectively, and SS set 0 and SS set 1 may be linked with each other. The UE may know that the same DCI is transmitted repeatedly in the PDCCH candidate of SS set 0 and the PDCCH candidate of SS set 1 and know that, based on a specific rule, a specific PDCCH candidate of SS set 0 and a specific PDCCH candidate of SS set 1 are a pair configured to repeatedly transmit the same DCI. The corresponding two PDCCH candidates are referred to as linked PDCCH candidates, and the UE may successfully decode the corresponding DCI when properly receiving either of the two PDCCH candidates. However, the UE may use the QCL RS (i.e., DL beam) of the TCI state of COERSET 0 connected to SS set 0 when receiving the PDCCH candidate of SS set 0 and use the QCL RS (i.e., DL beam) of the TCI state of COERSET 1 connected to SS set 1 when receiving the PDCCH candidate of SS set 1. Accordingly, the UE receives the associated PDCCH candidates by using different beams.

Hereinafter, the M-TRP SFN PDCCH/PDSCH transmission method will be described.

As one of M-TRP PDCCH repeated transmission types, multiple TRPs may repeatedly transmit the same DCI through the same time/frequency/DMRS port, and this transmission method may be referred to as SFN PDCCH transmission. However, for SFN PDCCH transmission, the BS configures a plurality of TCI states in one CORESET instead of configuring a plurality of CORESETs configured with different TCI states. When receiving a PDCCH candidate through an SS set connected to one corresponding CORESET, the UE may perform channel estimation of the PDCCH DMRS by using all of the corresponding plurality of TCI states and attempt decoding.

When repeatedly transmitting the M-TRP PDSCH described above, the two TRPs repeatedly transmit the corresponding channel on different resources. However, when the resources used by the two TRPs are the same, that is, when the same channel is repeatedly transmitted through the same frequency/time/layer (i.e., DMRS port), the reliability of the corresponding channel may be improved. In this case, the resources of the same channel that are repeatedly transmitted are not differentiated and are received together during transmission (i.e., air), and thus may be recognized as one channel (e.g., composite channel) in terms of a receiving end (e.g., UE). For SFN PDSCH transmission, two DL TCI states for PDSCH DMRS reception may be configured to the UE.

Hereinafter, the S-DCI-based M-TRP PUSCH repeated transmission method will be described.

In NR Rel-17 standardization, the BS configures two SRS sets to the UE for S-DCI-based M-TRP PUSCH transmission, and each set is used to indicate a UL Tx port for the TRP 1 and the TRP 2, a UL beam/QCL information. The BS may perform SRS resource indication for each SRS resource set through two SRI fields included in one DCI and indicate up to two PC parameter sets. For example, a first SRI field may indicate the SRS resource and PC parameter set defined in SRS resource set 0, and a second SRI field may indicate the SRS resource and PC parameter set defined in SRS resource set 1. The UE may receive instructions about a UL Tx port, a PC parameter set, and a UL beam/QCL information for the TRP 1 through the first SRI field, and therethrough, the corresponding UE performs PUSCH transmission in TO corresponding to SRS resource set 0. Similarly, the UE may receive instructions about a UL Tx port, a PC parameter set, and a UL beam/QCL information for the TRP 2 through the second SRI field, and therethrough, the corresponding UE performs PUSCH transmission in TO corresponding to SRS resource set 1. In addition to the SRI field, the existing one field is expanded into two fields to indicate TPMI, PTRS, and TPC fields for each TRP. STRP PUSCH repeated transmission may be performed by introducing a 2-bit SRS resource set indication field and selecting a specific one of two SRS sets, and MTRP PUSCH repeated transmission may be performed by selecting both. That is, when the corresponding field is 00 and 01, STRP PUSCH transmission corresponding to each set is performed by indicating SRS set 0 and SRS set 1, respectively, and when the corresponding field is 10, MTRP PUSCH transmission is performed in the order, in which a set pair is indicated, by indicating (SRS set 0, SRS set 1). That is, set 0 corresponds to first PUSCH TO. When the field is 11, MTRP PUSCH transmission is performed in the order, in which the set pair is indicated, by indicating (SRS set 1, SRS set 0). That is, set 1 corresponds to first PUSCH TO.

Hereinafter, a single PUCCH resource-based M-TRP PUCCH repeated transmission method will be described.

In NR Rel-17 standardization, for single PUCCH resource-based M-TRP PUCCH transmission, the BS may activate/configure, to the UE, two spatial relation info to a single PUCCH resource (in the case of FR1, two PC parameter sets are activated/configured). When UL UCI is transmitted through a corresponding PUCCH resource, each spatial relation info is used to indicate, to the UE, spatial relation info towards each of the TRP 1 and the TRP 2. For example, through a value indicated in the first spatial relation info, the UE is instructed to Tx beam/PC parameter(s) toward the TRP 1, and the UE performs PUCCH transmission in the TO corresponding to the TRP 1 by using the corresponding information. Similarly, through the value indicated in the second spatial relation info, the UE is instructed to Tx beam/PC parameter(s) toward the TRP 2, and the UE performs PUCCH transmission in the TO corresponding to the TRP 2 by using the corresponding information.

For M-TRP PUCCH repeated transmission, a configuration method is improved to configure two spatial relation inf in the PUCCH resource. That is, when a power control (PC) parameter such as PLRS, Alpha, P0, and closed loop index is configured in each spatial relation info, the spatial relation RS may be configured. As a result, PC information and spatial relation RS information corresponding to two TRPs may be configured through two spatial relation info. Therethrough, the UE transmits UCI (i.e., CSI, ACK/NACK, or SR) PUCCH by using the first spatial relation info in the first TO, and transmits the same UCI PUCCH by using the second spatial relation info in the second TO. In the disclosure, a PUCCH resource configured with two spatial relation info is referred to as an M-TRP PUCCH resource, and a PUCCH resource configured with one spatial relation info is referred to as an S-TRP PUCCH resource.

### Transmission configuration indication (TCI) state/beam indication

In description of the inventive concept, when receiving/transmitting data/DCI/UCI through a specific space/time/frequency resource, using (or mapping) a specific TCI state (or TCI) means that, in the case of DL, a channel is estimated from DMRS by using a QCL type and QCL RS indicated by a specific TCI state in a specific space/time/frequency resource, and data/DCI/UCI is received/demodulated through the estimated channel.

When data/DCI/UCI is received/transmitted through a specific space/time/frequency resource, using (or mapping) a specific TCI state (or TCI) means that, in the case of UL, DMRS and data/UCI is transmitted/modulated using Tx beams and/or Tx power indicated by a specific TCI state in a specific space/time/frequency resource.

The UL TCI state may include Tx beam or Tx power information of the UE. The BS may configure spatial relation info or the like to the UE through other parameters instead of the TCI state.

For example, the UL TCI state may be directly indicated to the UE through UL grant DCI. Alternatively, the UL TCI state may mean the spatial relationship info of an SRS resource indicated through an SRS resource indicator (SRI) field of the UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (set of up to 32 parameter values per cell), or q_d (index of DL RS resource for path loss (PL) measurement) (up to 4 measurements per cell), or/and I (closed loop power control process index (up to 2 processes per cell)).

For convenience of description of the inventive concept, it is assumed that 2 TRPs cooperate with each other to perform transmission/reception operations, but the inventive concept is not limited thereto. In other words, the inventive concept may be expanded and applied in an environment with multiple TRPs of 3 or more, and may also be expanded and applied in an environment in which the same TRP performs transmission/reception through different panels or beams. The UE may recognize different TRPs as different TCI states. When the UE transmits and receives data/DCI/UCI by using TCI state 1, it means that data/DCI/UCI is transmitted and received from the TRP 1 (or to TRP 1).

Transmission occasion (TO) refers to each channel transmitted at different times when multiple channels are TDMed, refers to each channel transmitted in different frequencies/RBs when multiple channels are FDMed, and refers to each channel transmitted at different layers/beams/DMRS ports when multiple channels are SDMed. One TCI state may be mapped to each TO. When the same channel is transmitted repeatedly, complete data/DCI/UCI is transmitted to one TO, and a receiving end may receive multiple TOs to increase a reception success rate.

### Single DCI based multi-TB PUSCH/PDSCH scheduling

In Rel.17 NR, a method in which one DCI simultaneously schedules multiple PUSCH/PDSCH in an ultra-high frequency band (beyond 5.26 GHz) is supported. For example, multiple TDRAs (=TO) may be indicated at once through a TDRA field of the PUSCH scheduling DCI, and different TBs for each TO are transmitted through the PUSCH. The FDRA, MCS, TPMI, and SRI values of the corresponding DCI are commonly applied to multiple scheduled TBs. NDI and RV for each TB are individually indicated through the corresponding DCI, and HARQ number indicates one value but increases sequentially in TO order based on the initial TO.

### Simultaneous transmission across multiple panels (STxMP)

Recently, for Rel. 18 NR standardization, a method for the UE to simultaneously transmit multiple channels/RSs of the same type or multiple channels/RSs of different types simultaneously has been discussed. In the case of existing UEs, an operation of transmitting multiple channels/RS at a time is limited (e.g., it is possible to simultaneously transmit multiple SRS resources of different SRS sets for UL beam measurement, but it is impossible to transmit multiple PUSCHs simultaneously), but in the case of advanced UEs in the future, this limit may be alleviated and multiple channels or RSs may be transmitted simultaneously using multiple transmission panels, and in this case, such UEs are called STxMP UEs. For example, two PUSCHs corresponding to two UL TBs are scheduled on the same RE, and for transmission of PUSCHs 1 and 2, spatial relation RS 1 and PC parameter Set 1 (i.e., UL TCI state 1), and Spatial relation RS 2 and PC parameter Set 2 (i.e., UL TCI state 2) are configured, respectively. The UE transmits PUSCH 1 by using panel 1 corresponding to UL TCI state 1 and simultaneously transmits PUSCH 2 by using panel 2 corresponding to UL TCI state 2.

When the BS performs PUSCH scheduling through DCI, the BS may indicate whether to transmit the PUSCH through STxMP, through a single panel, or through MTRP PUSCH repetition. The corresponding UE needs to have STxMP capability and an STxMP mode needs to be enabled previously through RRC signaling or the like. To this end, the existing SRS resource set indication field may be redefined and used, or a new DCI field may be introduced.

### UCI encoding method of UE-initiated beam report for inter-cell BM and MTRP

For a UE-initiated beam report considering inter-cell BM and inter-cell MTRP, a method of encoding and configuring report contents is proposed.

In the following explanation, the term "beam" may refer to a source RS for "spatial filter" or "spatial relation," and the term "beam" may be interpreted as a QCL (type-D) RS, a (DL/UL/joint) TCI state, or a spatial relation RS (in the case of UL). Beam measurement refers to the measurement of signals (e.g., RSs) transmitted and received through the corresponding beam/beamforming. Additionally, for convenience, a cell with a specific physical cell ID (PCI) may be referred to simply as a PCI.

In NR, BM is defined for beam measurement/reporting and beam activation/indication by the BS. For example, the beam measurement/reporting of the UE may be configured/indicated by the BS, and the BS may perform beam activation and beam indication to the UE based on the beam measurement/reporting of the UE.

In NR Rel-17, a beam measurement report for inter-cell beam management (ICBM) and inter-cell MTRP operations has been agreed upon as shown in Table 6. The encoding method for information included in the report has also been discussed.

**[Table 6]**

| |
|---|
| Regarding Rel-17 multi-beam measurement/reporting enhancements for L1/L2-centric inter-cell mobility and inter-cell mTRP: |
| - The quality of up to Kmax beams associated with the non-serving cell may be reported in a single CSI reporting instance. |
| - For each beam, the UE may report at least (1) a measured RS identifier and (2) a beam metric associated with the measured RS identifier. |
| - In a single reporting instance, depending on the network configuration, beams associated with the non-serving cell may be mixed with beams associated with the serving cell. |
| - A minimum of K=4 is supported, where K is defined as the number of beams associated with the non-serving cell reported in a single CSI reporting instance. |
| - The maximum value of K, denoted as Kmax, is determined by the UE capability. |
| - K is configured by the network according to the UE capability. |
| - For K > 4, the maximum number of beams associated with a single cell is 4. |
| *Note: The above is applied even if beam metrics other than L1-RSRP are supported. |
| Regarding Rel-17 enhancements for ICBM and inter-cell mTRP: |
| - L1-RSRP reporting reuses the Rel-15 L1-RSRP table. |
| - N_{MAX} (the maximum number of PCIs that are RRC-configured differently from the serving cell for measurement/reporting) may vary depending on the UE capability, and candidate values thereof include at least 1 and X. |
| - When N_{MAX} is set to X, the UE may be RRC-configured to measure L1-RSRP for up to X PCIs, which are different from the serving cell PCI. |
| - In a single L1-RSRP reporting instance, the Rel-15 L1-RSRP reporting format is reused for all SSBRI-RSRP pairs. That is, for K > 1, (K-1) 4-bit differential L1-RSRP values are calculated for the reference (absolute) 7-bit L1-RSRP. |
| - CSI-SSB-ResourceSet configured for L1-RSRP measurement/reporting includes at least one SSB index set associated with each PCI index. The PCI index refers to a PCI within a PCI set configured for ICBM or inter-cell multi-TRP. |

Based on Table 6, beam measurement/reporting for supporting ICBM may be summarized as follows:

### Multi-beam Measurement Reporting for L1/L2-centric ICBM/MTRP

### (1) Measurement RS

1) An SSB is supported, and L1-RSRP is used as the reporting quantity.
2) CSI-SSB-ResourceSet configured for L1-RSRP measurement/reporting includes at least one set of SSB index values.
   i. The set of SSB indices is associated with PCI indices.
   ii. Additional information (additionalInfo) associated with SSB(s) different from PCI(s) of the serving cell may also be applied to ICBM.
3) Nₘₐₓ (the number of PCIs configured differently from the serving cell for measurement/reporting) is the UE capability, and candidate values include 1 to 7.
   i. When Nₘₐₓ is set to X, L1-RSRP measurement for up to X PCIs, different from the PCI of the serving cell, may be configured by RRC for the UE.

### (2) Reporting Content

1) The quality and measured RS identifiers of up to 4 beams.
2) In a single reporting instance, beams associated with the non-serving cell may be mixed with beams associated with the serving cell.
3) L1-RSRP reporting reuses the Rel-15 L1-RSRP table/format.

In particular, as an exemplary method of encoding reporting contents addressed in this specification, the existing Rel-15 method is reused to represent the beam quality for up to 4 beams. That is, the best quality value is expressed as an absolute value using 7 bits, while the remaining quality values for the other beams may be represented as differential values, which are the difference from the absolute value, using 4 bits.

On the other hand, the issues in the current ICBM beam measurement/reporting process are as follows. In environments where the UE movement is significant or there is significant movement of objects around the UE, frequent beam measurement/reporting is required to find the optimal beam. This leads to problems such as: RS overhead, power consumption for transmitting RSs from the perspective of the BS, and increases in implementation burden and power consumption for the UE measurement/reporting.

As explained above, since the UE needs to measure measurement RSs of non-serving cell(s) based on the Nₘₐₓ value configured by RRC, the power consumption of the UE may increase depending on the number of measurement RSs. Additionally/alternatively, depending on the BS configuration, the UE may be required to measure RSs for PCI(s) that have little impact on the UE in terms of signal strength or channel characteristics, which depend on the distance from the cell/TRP. This may further increase the power consumption of the UE. Additionally, as described above, for ICBM/MTRP purposes, the measurement RSs for non-serving cells are added based on the measurement RS configuration. The size of an indication field (e.g., CRI/SSBRI field) used to indicate specific RS IDs for measurement/reporting based on the RSs increases. Furthermore, if it is based on the preconfigured RS configuration, the size of the indication field remains fixed for each report instance, resulting in overhead.

In the Rel-19 standardization discussions, it was agreed to standardize the following content in order to introduce a process where a beam report is triggered by the UE based on changes in beam quality, rather than beam measurement/reporting configured/indicated by the BS, and beam indication is performed accordingly.

*To reduce overhead and*/*or latency, UE-initiated*/*event-based BM is defined. The use of unified TCI is assumed, while the framework of existing CSI measurement reporting configurations is leveraged, targeting FR2 and intra-cell*/*inter-cell STRP.*
- *UL signaling content for UE-initiated*/*event-based beam reporting for rapid beam switching*
- *UL signaling means*/*container considering UE-initiated*/*event-driven characteristics of UE transmission designed primarily for beam reporting*

The currently supported NR beam measurement/reporting is performed based on the configuration/indication of the BS. In particular, for ICBM, the number of RSs the UE needs to measure increases with the number of non-serving cells configured. This leads to an increase in UE power consumption and an increase in BS power consumption as RSs are transmitted in a preconfigured manner.

Therefore, according to an embodiment, instead of the UE performing (ICBM) beam measurement/reporting based on targets and methods preconfigured by the network as in the prior art, the UE may autonomously determine whether the quality of measurement beams corresponding to different PCI(s) is degraded or that beam switching is needed. In this case, the UE may initiate the (ICBM) beam report. Additionally/alternatively, for the (ICBM) beam report, the UE may autonomously select the PCI(s), thereby effectively determining candidate measurement RSs.

As a result, the UE may proactively perform the (ICBM) beam report. When the UE selects multiple PCIs/RS sets and performs the beam report based on the corresponding beam quality and IDs, the size of a beam report payload may increase (linearly) depending on the number of included PCIs/RS sets. Therefore, proposed is a method of encoding and sorting reporting quantities to effectively structure the UE-initiated beam report contents during the operation.

For example, when the UE selects and reports multiple PCIs/RS sets in relation to the UE-initiated beam report, an encoding and structuring method for the reporting contents is proposed. Additionally/alternatively, proposed is the reconfiguration of an indication field based on the measurement RS selection of the UE, which is guided by the indication of candidates for measurement RS associated with (serving/non-serving) PCIs.

According to the following embodiments, when the UE reports information on a preferred/non-preferred PCI and an associated resource set to the network, the network may turn off the corresponding measurement RS/cell. In this case, the size of the indication field that indicates the RS ID for the beam quality values during the beam report may be configured to vary, thereby reducing the reporting overhead. Additionally, according to the proposed encoding and sorting method, the issue that the beam report payload size increases (linearly) depending on the number of PCIs/RS sets included when the UE selects multiple PCIs/RS sets for the beam report may be resolved.

In the following, for inter-cell BM/MTRP purposes, the UE selects M candidate PCI(s)/RS set(s) autonomously from among measurement RSs associated with different PCI(s). Additionally/alternatively, the UE selects a corresponding resource set or resource configuration, and for each PCI, the maximum of N (best) beam quality values and corresponding RS IDs are configured as the report quantity. The report quantity for multiple PCIs included in the report may be expressed as shown in the example in Table 7. For convenience, the proposal will be described based on the example in Table 7. In Table 7, the number of PCIs and the number of beams per PCI are exemplary and may vary.

In Table 7, it is assumed that 3 PCIs (PCI#1, PCI#2, PCI#3) are selected, and for each PCI, 4 {beam quality, RS ID} pairs are reported as the report quantity.

**[Table 7]**

| | PCI#1 (P1) | PCI#2 (P2) | PCI#3 (P3) |
|---|---|---|---|
| 1^{st} beam (B1) | {Q(P1, B1), ID(P1, B1)} | {Q(P2, B1), ID(P2, B1)} | {Q(P3, B1), ID(P3, B1)} |
| 2^{nd} beam (B2) | {Q(P1, B2), ID(P1, B2)} | {Q(P2, B2), ID(P2, B2)} | {Q(P3, B2), ID(P3, B2)} |
| 3^{rd} beam (B3) | {Q(P1, B3), ID(P1, B3)} | {Q(P2, B3), ID(P2, B3)} | {Q(P3, B3), ID(P3, B3)} |
| 4^{th} beam (B4) | {Q(P1, B4), ID(P1, B4)} | {Q(P2, B4), ID(P2, B4)} | {Q(P3, B4), ID(P3, B4)} |

- {P1, P2, P3}: IDs corresponding to the PCIs - {B1, B2, B3, B4}: Beam IDs ordered by the magnitude of the beam quality values
- Q(Pi, Bj): An actual beam quality value representing an j-th beam quality value within an i-th PCI
- ID(Pi, Bj): An RS ID corresponding to Q(Pi, Bj)

For example, in Table 7, the beam quality values within the same PCI might be ordered as B1 > B2 > B3 > B4. However, for different PCIs, B1 of a specific PCI may have a lower quality value than B2 of another PCI.

In the example of Table 7, a PCI may be replaced by an RS set.

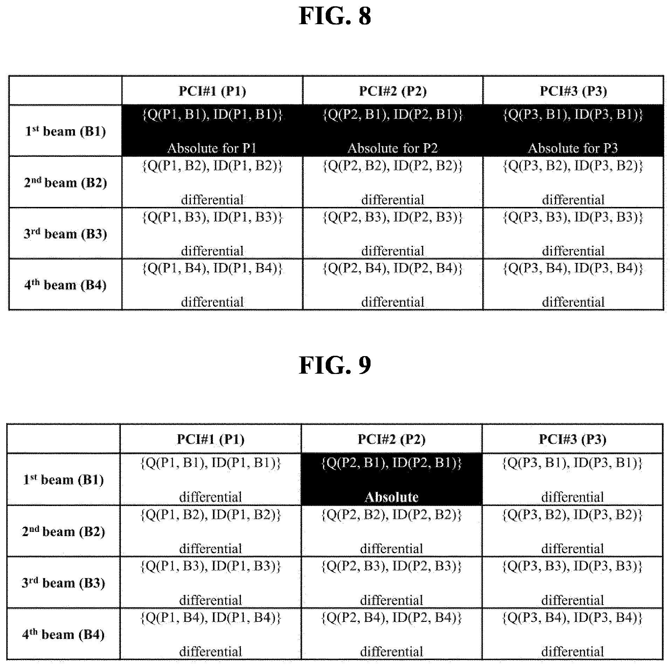

Meanwhile, the table-based representation used in FIG. 7 (and FIGS. 8 to 10, which will be described later) is merely a way to facilitate the explanation of the proposed encoding method and does not imply that the measurement values (Q) and ID values (ID) reported by the UE are arranged/organized in such a table structure. The measurement values (Q) and ID values (ID) in the report will be explained in detail in Proposal 2.

Additionally, in the following explanation, an encoding method for specific information may refer to a method of determining a field value (or code point) that will be configured in a field providing the specific information. For example, quality value A and/or ID value B may be included in a measurement report as they are. However, depending on the pre-agreed/configured encoding method between the UE and the network, A and/or B may be reported/indicated with fewer bits.

### Proposal 1

Encoding methods for beam quality value and RS indication fields in a beam report that includes PCIs/RS sets are proposed.

### [Beam quality value]

### (1) Alt 1-1: Application of an encoding method for the absolute/differential values of the beam quality for each PCI/RS set

FIG. 8 illustrates an exemplary encoding method for the beam report according to Alt 1-1.

For example, as a method of representing the beam quality value for each PCI/RS set, the largest L1-RSRP value among up to N beams corresponding to each PCI (e.g., B1 for each PCI in the example of FIG. 8) is set as an absolute value, and X bits may be allocated to represent the largest L1-RSRP value. The remaining N-1 L1-RSRP values for each PCI are set as differential values, which are the differences from the absolute value, and Y bits may be allocated to represent the remaining N-1 L1-RSRP values. X > Y may be satisfied.

In FIG. 8, for PCI#i (where i is 1, 2, or 3), Q(Pi, B1) is expressed as the absolute value, and Q(Pi, B2), Q(Pi, B3), and Q(Pi, B4) may each be expressed as differential values relative to Q(Pi, B1).

### (2) Alt 1-2: Application of an encoding method for the absolute/differential values of the beam quality for all reported PCIs/RS sets

FIG. 9 illustrates an exemplary encoding method for the beam report according to Alt 1-2.

The largest value among (instantaneous and/or average) beam quality values in all reported PCIs/RS sets is set as an absolute value, and X bits are allocated to represent the largest value.

The remaining (i.e., [the number of reported PCIs/RS sets] * [the number of beams reported per PCI/RS set] - 1) beam quality values are expressed as differential values relative to the absolute value, and Y bits may be allocated for the remaining beam quality values.

For example, referring to FIG. 9, if B1 of PCI#2 has a higher (highest) quality than B1 of other PCIs, Q(P2, B1) is reported/encoded as the absolute value, while the remaining quality values are encoded/reported as differential values relative to Q(P2, B1).

For example, the UE may report to the BS a PCI to which the beam quality value determined as the absolute value belongs to.

(3) Alt 1-3: For the beam quality values of all reported PCIs/RS sets, after the values of B1 are encoded as in Alt 1-2 (differential encoding between different PCIs in B1), B2 to B4 corresponding to each PCI are encoded as differential values relative to B1 of each PCI (differential B2 to B4 encoding based on B1 of each PCI).

For example,
- As in the example of Alt 1-2, since the beam quality value included in PCI#2 is the largest value in B1, the corresponding value is set as an absolute value (X bits).
- The quality values corresponding to B1 of PCI#1 and PCI#3 are set as differential values relative to Q(P2, B1) (Y1 bits).
- The B2 to B4 beam quality values for each PCI are set as differential values relative to the encoded B1 value of each PCI (Y2 bits). For example, for i=1, 3, 4, Q(Pi, B2), Q(Pi, B3), and Q(Pi, B4) may be encoded/reported as differential values relative to Q(Pi, B1), rather than Q(P2, B1).
- In this case, the Y1 and Y2 values may be set/indicated as the same or different.

For example, the UE may report to the BS a PCI to which the beam quality value determined as the absolute value belongs to.

(4) Alt 1-4: For the beam quality values of all reported PCIs/RS sets, differential encoding is performed for each Bi.

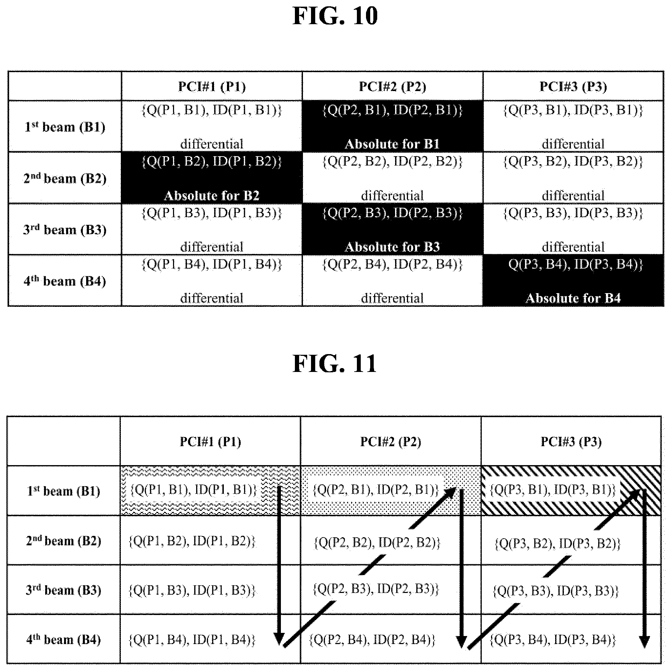

FIG. 10 illustrates an exemplary encoding method for the beam report according to Alt 1-4.

The UE may set the largest beam quality value across multiple PCIs for each Bi as an absolute value (X bits). The remaining beam quality values corresponding to the other PCI(s) for each Bi may be set as differential values, which are the differences from the absolute value for each Bi (Y bits).

Referring to FIG. 10, for B1 measurement, PCI#2 has the highest measurement value among PCI#1, PCI#2, and PCI#3. For B2 measurement, PCI#1 has the highest measurement value among PCI#1, PCI#2, and PCI#3. For B3 measurement, PCI#2 has the highest measurement value among PCI#1, PCI#2, and PCI#3. For B4 measurement, PCI#3 has the highest measurement value among PCI#1, PCI#2, and PCI#3.
- For B1, the beam quality value Q(P2, B1) corresponding to PCI#2 is set as the absolute value, and the beam quality values corresponding to PCI#1 and PCI#3 are set as differential values relative to Q(P2, B1).
- For B2, the beam quality value Q(P1, B2) corresponding to PCI#1 is set as the absolute value, and the beam quality values corresponding to PCI#2 and PCI#3 are set as differential values relative to Q(P1, B2).
- For B3, the beam quality value Q(P2, B3) corresponding to PCI#2 is set as the absolute value, and the beam quality values corresponding to PCI#1 and PCI#3 are set as differential values relative to Q(P2, B3).
- For B4, the beam quality value Q(P3, B4) corresponding to PCI#3 is set as the absolute value, and the beam quality values corresponding to PCI#1 and PCI#2 are set as differential values relative to Q(P3, B4).

For example, the UE may report to the BS a PCI to which the beam quality value per Bi determined as the absolute value belongs to.

### [RS indication field (or information)]

When only some PCI(s)/RS set(s) are selected for measurement/reporting purposes, codepoints corresponding to the unselected PCI(s)/RS set(s) are not used and may become leftover unused codepoints.

Therefore, during subsequent RS measurement/reporting, to indicate an RS ID (which shows an RS the UE is measuring and reporting), the UE may use codepoints corresponding to reduced measurement RS subset(s) resulting from the selection of the PCI(s)/RS set(s).

In this case, the PCI/RS set selection for the RS subset configuration may be indicated/reported through the beam report of the UE, or the PCI/RS set may be indicated through BS signaling (i.e., MAC-CE and/or DCI).

In Proposal 1, encoding of the report quantity may be broadly divided into beam quality values and corresponding RS indication fields.

For example, for beam quality values, as shown in FIG. 8, the beam quality value corresponding to B1 for each PCI may be set as an absolute value with X (e.g., 7) bits. The values corresponding to B2 to B4 may be set as differential values relative to the absolute value of B1 with Y (e.g., 4) bit.

Alternatively, as shown in FIG. 9, without distinguishing between values for each PCI, the largest value among the beam quality values for all the PCIs reported/considered may be set as the absolute value with X bits. The remaining (i.e., [the number of reported PCIs/RS sets] * [the number of beams reported per PCI/RS set] - 1) beam quality values may be set as differential values with Y bits. In this case, information about a PCI corresponding to the absolute value may be included as part of report information.

Alternatively, for the beam quality values of all reported PCIs/RS sets, after the values of B1 are encoded as in Alt 1-2 (differential encoding in terms of B1), B2 to B4 corresponding to each PCI are encoded as differential values relative to B1 of each PCI (including a method for differential B2 to B4 encoding based on differential B1).

Alternatively, as shown in FIG. 10, the largest beam quality value for each Bi may be set as the absolute value (X bits), and the beam quality values corresponding to the remaining PCI(s) for each Bi may be set as differential values, which are the differences from the absolute value for each Bi (Y bits).

Alternatively, if sorting by beam quality values from B1 to B4 is not considered/supported for up to K pieces of beam information per PCI, an indicator may be needed to specify which beam quality for each PCI will be the absolute value.

Alternatively, the beam quality (e.g., first beam quality) of a specific position for each PCI may be set as the absolute value, and the remaining beam quality values may be expressed as differential values. In this case, since the differential values relative to the absolute value may need to be added or summed, an indicator therefor may be necessary. Alternatively, candidate(s) may be added to a differential beam quality value table, which increases the positive value, and an ID corresponding to the table may be indicated for representation.

Regarding encoding of an RS indication field (e.g., CRI/SSBRI), if the UE performs RS measurement and reporting based on some PCI subset(s)/RS set(s), the BS may transmit or not transmit RSs corresponding to or not corresponding to the information. Through the indicated PCI subset(s)/RS set(s), the UE and BS may identify RSs corresponding to or not corresponding to specific PCI(s)/RS set(s) based on a preconfigured RS configuration and report configuration. Therefore, during subsequent RS measurement/reporting, to indicate an RS ID, the UE may use codepoints corresponding to reduced RS subset(s) resulting from the selection of the PCI subset(s)/RS set(s) to indicate the RS ID, rather than configuring the RS indication field (e.g., CRI/SSBRI) for all the RSs.

For example, if the number of measurement RSs configured by RRC is 4 (CRI bits = 2 and corresponding RS IDs = RS#0, RS#1, RS#2, RS#3), and network signaling indicates that measurement reports for RS#1 and RS#2 are not needed, the actual number of RSs used for measurement becomes 2 (RS#0, RS#3). Therefore, a CRI bit used to indicate the 2 RSs may be changed from the original 2 bits to 1 bit when beam report contents are configured. In this case, if CRI=0, it may correspond to RS#0, and if CRI=1, it may correspond to RS#3.

Alternatively, in the above example, the RS subset may be preconfigured (e.g., set#0 = {RS#0, RS#1, RS#2, RS#3} / set#1 = {RS#0, RS#3} / set#2 = {RS#0, RS#1, RS#2}), and the set index may be signaled via a MAC-CE and/or DCI to indicate a candidate set for measurement RSs.

When considering measurement reports that are reported on different physical channels in different reporting instances, rather than being encoded within the same UCI, if the BS fails to receive information in a previous reporting instance, a mismatch issue regarding the selected RS subset(s) may arise between the BS and UE. For example, if the UE applies codepoints corresponding to the RS subset(s) in the current reporting instance, the BS may fail to correctly interpret the codepoints. To resolve this issue, the UE may receive from the BS a confirmation/ACK for the information reported in the most recent reporting instance, and then perform the operations (e.g., updating the RS subset(s) and reusing unused codepoints).

### Proposal 1-1

Hereinafter, an exemplary method of configuring/indicating the values of X and Y for each PCI when encoding the report contents described in Proposal 1 will be described.

For example, PCIs may be sorted according to a specific criterion, and the number of bits for representing the absolute/differential values for each PCI as well as a table for the corresponding beam quality values may be configured/indicated.

Example 1) When there are 3 PCIs (i.e., PCI#1, PCI#2, PCI#3) as in the example of Proposal 1,
- Candidate values for the number of absolute bits {X#1, X#2, X#3} = {7, 6, 5}; and
- Candidate values for the number of differential bits {Y#1, Y#2, Y#3} = {5, 4, 4} may be predefined/configured, and based thereon, the number of absolute bits and/or the number of differential bits may be determined/indicated.

Meanwhile, for configurations with the same X bits and/or the same Y bits, an RSRP table used to represent the beam quality values may be configured differently, thereby allowing the RSRP resolution to vary by table index.

### Example 2) The beam quality value table corresponding to the number of differential bits in Example 1

$\left\{T#1, T#2, T#3\right\} = \left\{5-bit table, 4-bit table#1, 4-bit table#2\right\}$

The 4-bit table#1 has a 1dB interval (e.g., 0, -1dB, -2dB, ...).

The 4-bit table#2 has a 3dB interval (e.g., 0, -3dB, -6dB, ...).

As an example of a specific criterion, one or more of the following may be considered:
- Comparison of (best and/or average) beam quality values for each PCI/RS set;
- (Best and/or average) beam quality values for each PCI/RS set corresponding to the threshold(s); and/or
- The number of times the corresponding PCI/RS set is selected across multiple instances.

The X and Y values for each PCI and/or the corresponding beam quality value table may be predefined/fixed or be information configured by the BS to the UE. Alternatively, in the case of two-part encoding, the UE may determine the X and Y values and/or the corresponding beam quality value table (either common or specific to PCI(s)/RS set(s)), and information on the UE determination may be reported to the network as part 1 information.

Instead of applying X = 7 and Y = 4, which are the same as the numbers of bits applied when encoding the beam quality values for each PCI as in Proposal 1, Proposal 1-1 is related to a method for configuring/indicating the numbers of bits for each PCI and/or differentially based on the relationship between absolute and differential values.

As criteria for differentiating the X and Y values per PCI, the following factors may be considered: (i) the performance level of the beam quality value for a corresponding PCI, (ii) the average beam quality, and/or (iii) the reliability in the time domain, such as whether a corresponding PCI is selected for beam reporting even if measurement is performed across multiple time instances.

According to such criteria, if a specific PCI is prioritized, the corresponding absolute or differential values may be expressed with greater precision compared to the existing method, or the resolution of the table used to express the (differential) beam quality values may be varied. Accordingly, it may be used for the beam information for the corresponding PCI and the beam indication based thereon. In addition, even when the same number of bits is configured/indicated, it is possible to indicate multiple beam quality value tables and configure different resolutions for each table, thereby representing the beam quality value information in such a way that the difference between the actual value and the beam quality value is minimized, based on the characteristics of the beam quality value for the corresponding PCI. For such configurations/indications, the values of {X, Y, table ID} may be fixed, or the BS may configure these values for the UE. Alternatively, the UE may select the value(s) and report the value(s) to the BS. For example, in the case of two-part encoding, the information may be included as part 1 information in the report.

### Proposal 2

For example, a method/order of sorting/including beam quality values, encoded based on Proposal 1, as report contents within a report will be described. The directions of arrows for describing the examples of Proposal 2 in FIGS. 11 to 14 may indicate the order in which information elements are arranged/sorted/included in the measurement report of the UE,.
(1) Alt 2-1: A method for sequentially sorting the absolute/differential values of the beam quality for each PCI/RS set.

For example, encoded beam quality values from B1 to B4 in each PCI/RS set may be sorted in order to configure report contents.

FIG. 11 is a diagram for explaining sorting of report contents according to Alt 2-1.

Referring to FIG. 11, encoded L1-RSRP values from B1 to B4 in each PCI/RS set may be concatenated to configure the report contents.

In FIG. 11, for convenience of explanation, it is assumed that the order of B1 to B4 in PCI#1 > B1 to B4 in PCI#2 > B1 to B4 in PCI#3. However, the order of PCIs is not limited thereto.

For example, the sizes of each B1 in PCIs/RS sets are compared. Then, the PCIs may be sorted in descending order of the quality values of B1. For instance, if Q(P2, B1) > Q(P3, B1) > Q(P1, B1), the sorting order may be PCI#2 → PCI#3 → PCI#1.

(2) Alt 2-2: Based on the encoding in Alt 1-2, the beam quality values for PCIs/RS sets with absolute values may be sorted first.

As described in Alt 1-2, the UE may be required to report the information or index of a PCI/RS set corresponding to the absolute value.

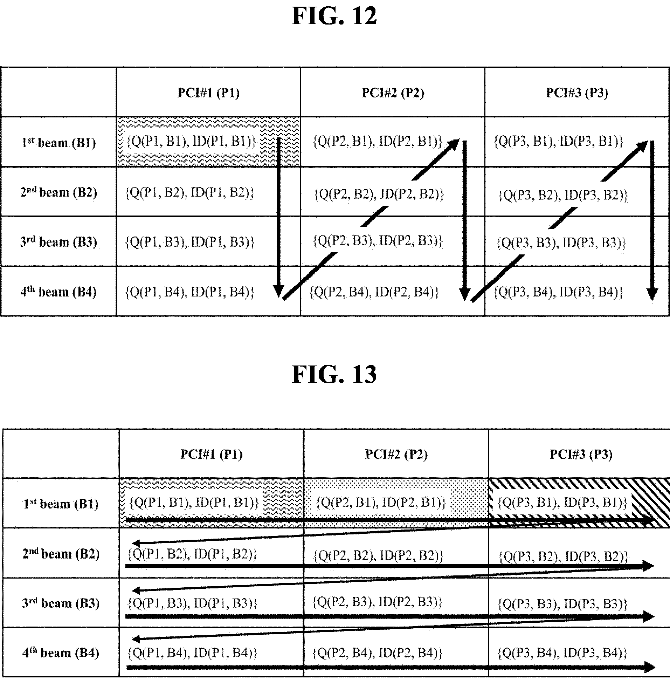

FIG. 12 is a diagram for explaining sorting of report contents according to Alt 2-2.

Referring to FIG. 12, in this case, PCI#1 with the absolute value Q(P1, B1) is placed first. Within PCI#1, the sorting may follow the order of: B1, B2, B3, B4. The order for the remaining PCIs/RS sets corresponding to values other than the absolute value may follow at least one of the following, but the present disclosure is not limited thereto.
(i) Sorting in increasing/decreasing order based on the PCI/RS set ID;
(ii) Applying circular rotation based on a specific PCI; and
(iii) Sorting by comparing the size of B1 for each PCI/RS set and arranging the PCIs in order of the largest B1 value.

(3) Alt 2-3: Sorting based on the order of beam quality values for PCI(s) to be considered.

In an embodiment, for at least one of the beams (B1, B2, B3, B4), sorting may be performed per PCI rather than by the beam quality value order. For example, all the quality values may be sorted per PCI rather than by beam quality value order. Alternatively, some of the beams may be sorted per PCI, while others are sorted according to the beam quality value order.

Meanwhile, omission of a UCI payload to be reported may occur/be required. For example, due to constraints such as the maximum reportable payload size, it may be necessary to omit some quality values. In this case, the quality values that are included/placed/sorted last may be omitted first.

As a simple example of omission, if beam quality values are sorted in descending order (across all PCIs) and omission is necessary, the omission may be performed in the following order: B4 → B3 → B2 (e.g., the lowest beam quality value is omitted first) in the report contents. However, according to the method, if a specific PCI has poor quality, all of B1 to B4 for the PCI may be omitted. For example, if B4 of PCI#1 has a higher quality value than B1 of PCI#2, B4 of PCI#1 may be reported, while all of B1 to B4 of PCI#2 may be omitted.

If PCI#1, PCI#2, and PCI#3 are selected by the UE, the network needs to expect/prepare for transmission and reception based on the PCIs. To this end, it may be desirable to receive at least some beam quality reports from the UE for the corresponding PCIs. However, if B1 to B4 for a specific PCI are omitted entirely, a problem may arise where the network is incapable of performing the above operation.

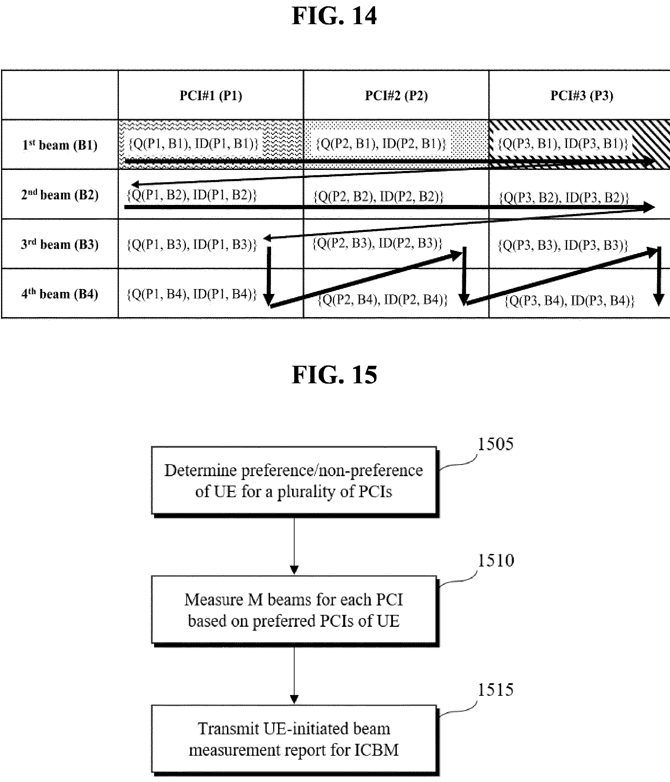

As an example to solve this problem, a method of sorting measurement values as shown in FIG. 13 or 14 is proposed. To this end, the likelihood that the average beam quality value per PCI is higher and/or the likelihood that a PCI with a larger absolute value generally has better beam quality values may be considered. In FIG. 13/14, the measurement values that are arranged/sorted later in the order may be omitted first.

FIG. 13 is a diagram for explaining an example of sorting report contents according to Alt 2-3.

Referring to FIG. 13, the quality values for B1 for each PCI are included first, and B2, B3, and B4 for each PCI are sequentially included/sorted. In the example shown in FIG. 13, PCIs are included in the following order: PCI#1, PCI#2, and PCI#3 within the same Bi, but the present disclosure is not limited thereto. For example, within the same Bi, the PCIs may be arranged/sorted in descending order of the average beam quality values of B1 to B4. Alternatively, the PCIs may be sorted in descending order of the absolute values within the same Bi.

FIG. 14 is a diagram for explaining another example of sorting report contents according to Alt 2-3.

Referring to FIG. 14, B1 and B2 are sorted in the same way as in FIG. 13. After B2, the report contents may be configured by sorting the quality values of B3 and B4 for each PCI.

The example in FIG. 14 follows the sorting method in FIG. 13 for at least some of the beams including the best beam, B1. For the remaining beams, the method in FIG. 11 or the method in FIG. 12 may be applied.

For example, the UE should report at least one quality value (e.g., B1) for each PCI that the UE prefers/selects, and then, the remaining values may be sorted/included in descending order of quality across PCIs and Bi.

(4) Alt 2-4: When the encoding method is Alt 1-3, sorting may be sequentially performed from the best beam quality value of B1. Then, the reporting quantities of B2 to B4 may follow the PCI order sorted based on the quality values of B1. Alternatively, the reporting quantities may be concatenated in increasing/decreasing order of the PCIs or by applying circular rotation based on a specific PCI.

(5) Alt 2-5: When the encoding method is Alt 1-4, sorting may be performed from the best beam quality value for each Bi, and the remaining PCI(s) in Bi may follow the beam quality value order, the increasing/decreasing order of PCI indices, or circular rotation based on a specific PCI.

In this case, a PCI indicator, which specifies which PCI was used as the reference for encoding for each Bi, may be included as part of report information.

Alternatively, for remaining Bi, concatenation may be performed in the same way based on the PCI ordering in B1.

In the cases of Alt 2-2, 2-3, or 2-4, information about PCI(s) used as the sorting criteria may be included in the report contents. In the case of two-part encoding, the information may be included as part 1 information.

Proposal 2 discussed above may refer to a UCI configuration method for a UE-initiated beam report for inter-cell BM/MTRP, considering the beam quality values and corresponding RS IDs encoded based on PCIs/RS sets as described in Proposal 1.

For example, as in Alt 2-1, {beam quality value, RS ID} pairs may be sorted in the order from B1 to B4 for each PCI/RS set based on the beam quality values configured per PCI. In this case, the pairs may be configured in increasing/decreasing order based on the PCI ID. However, PCIs may also be sorted based on the "specific criteria" in Proposal 1-1, and concatenation may be performed based thereon.

Alternatively, as in Alt 2-2, when the encoding method for beam quality values is Alt-1-2, the {beam quality value, RS ID} pairs for a PCI containing the absolute value are sorted first, and then the report quantities for the remaining PCI(s)/RS set(s) may be sorted. In this case, sorting may be based on the PCI ID, or the "specific criteria" in Proposal 1-1 may be applied to the remaining PCI(s).

Alternatively, instead of sorting by the PCI, as in Alt 2-3, the report quantities may be sorted based on the relationship of beam quality values in descending order (i.e., B1 to B4). When the UCI payload is large and omission needs to be considered, this method prevents the complete or majority omission of information on a specific PCI. After considering multiple beams for the PCI(s)/RS set(s) to be considered, subsequent beam indication may be performed. Alternatively, for beams with relatively better quality, such as B1 and/or B2, the above method may be applied, while for B3 and B4, PCI-based sorting may be performed. In this case, although most of the information on the specific PCI may be dropped, it is possible to include more beam information on another specific PCI that has a relatively good quality value and a good average beam quality value. It is possible to use this method for subsequent beam indication and other operations based on the priority.

For example, in the case of Alt 2-2, information corresponding to the absolute value and PCI information corresponding to the absolute value (i.e., PCI#2) are included based on two-part encoding. As part 2 information, for {beam quality, RS ID} pairs corresponding to B2 to B4 of PCI#2, as well as for the remaining PCIs, {beam quality, RS ID} pairs of B1 to B4 for each PCI may be concatenated in the order of PCI#1, PCI#3, based on the increasing order. In this case, if CSI omission is performed, some part 2 information, that is, information on B1 to B4 of PCI#3, may be dropped first, depending on the level of omission. If further omission is performed, information on B1 to B4 of PCI#1 may be dropped subsequently. .

The above encoding and sorting methods may operate either individually, in combination, or simultaneously. Furthermore, the operations may be performed according to a preconfigured method, or the UE may select and indicate the encoding/sorting method during the (separate) report. Alternatively, the BS may indicate a specific encoding/sorting method to the UE through signaling (i.e., MAC-CE and/or DCI).

FIG. 15 illustrates a flow of a method performed by a UE according to an embodiment.

Referring to FIG. 15, the UE may determine preference/non-preference of the UE for a plurality of PCIs (1505).

The UE may measure M beams for each PCI based on preferred PCIs of the UE (1510).

The UE may transmit a UE-initiated beam measurement report for ICBM based on the measurement (1515). The UE-initiated beam measurement report may be configured to include: measurement values of at least N beams among the M beams measured for each PCI; and RS ID information for the at least N beams.

The number of preferred PCIs is L, and at least a part of a total of L * M measurement values may be omitted in the UE-initiated beam measurement report.

The measurement values of the at least N beams for each PCI may not be omitted and may be always included in the UE-initiated beam measurement report.

A sorting order of the measurement values of the at least N beams for each PCI in the UE-initiated beam measurement report may be determined based on an average or maximum value of measurement values of the M beams for each PCI.

The UE-initiated beam measurement report may be configured based on a plurality of {measurement value, RS ID information} pairs.

Among the plurality of {measurement value, RS ID information} pairs, measurement values included in at least one first {measurement value, RS ID information} pair may be encoded as absolute values, and measurement values included in at least one second {measurement value, RS ID information} pair may be encoded as differential values relative to the absolute values.

The measurement values encoded as the absolute values may include a highest measurement value for each PCI.

X bits may be assigned to each absolute value, and Y bits may be assigned to each differential value, where Y may be smaller than X.

The UE-initiated beam measurement report may include information regarding which PCI is related to each absolute value

The UE may transmit information regarding the preference/non-preference of the UE determined for the plurality of PCIs.

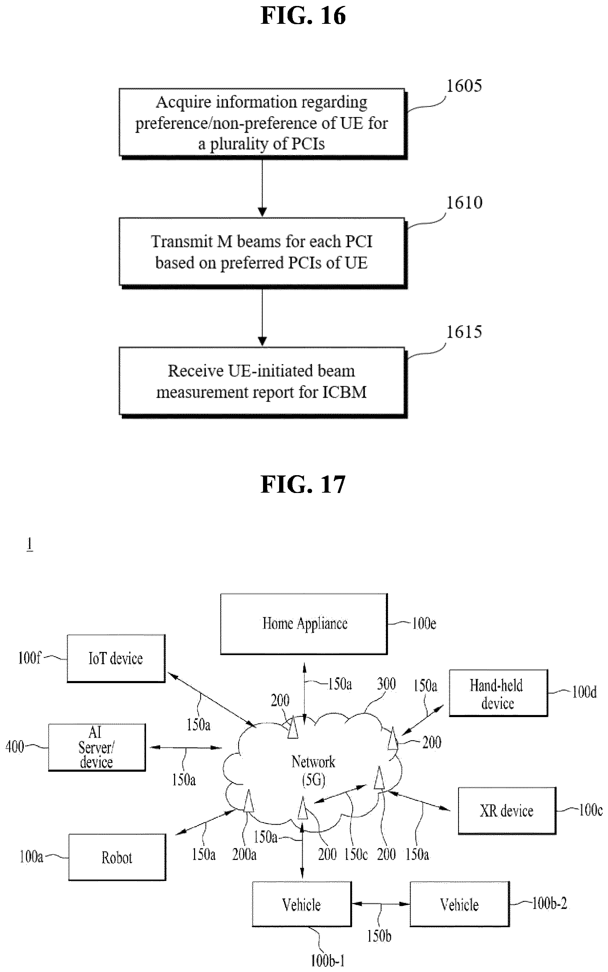

FIG. 16 illustrates a flow of a method performed by a BS according to an embodiment.

Referring to FIG. 16, the BS may acquire information regarding preference/non-preference of a UE for a plurality of PCIs (1605).

The BS may transmit M beams for each PCI based on preferred PCIs of the UE (1610).

The BS may receive a UE-initiated beam measurement report for ICBM from the UE

(1615). The UE-initiated beam measurement report may include: measurement values of at least N beams among the M beams measured for each PCI; and RS ID information for the at least N beams.

The number of preferred PCIs is L, and at least a part of a total of L * M measurement values may be omitted in the UE-initiated beam measurement report.

The measurement values of the at least N beams for each PCI may not be omitted and may be always included in the UE-initiated beam measurement report.

A sorting order of the measurement values of the at least N beams for each PCI in the UE-initiated beam measurement report may be determined based on an average or maximum value of measurement values of the M beams for each PCI.

The UE-initiated beam measurement report may be configured based on a plurality of {measurement value, RS ID information} pairs.

Among the plurality of {measurement value, RS ID information} pairs, measurement values included in at least one first {measurement value, RS ID information} pair may be encoded as absolute values, and measurement values included in at least one second {measurement value, RS ID information} pair may be encoded as differential values relative to the absolute values.

The measurement values encoded as the absolute values may include a highest measurement value for each PCI.

X bits may be assigned to each absolute value, and Y bits may be assigned to each differential value, where Y may be smaller than X.

The UE-initiated beam measurement report may include information regarding which PCI is related to each absolute value

FIG. 17 illustrates a communication system 1 applied to the disclosure.

Referring to FIG. 17, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

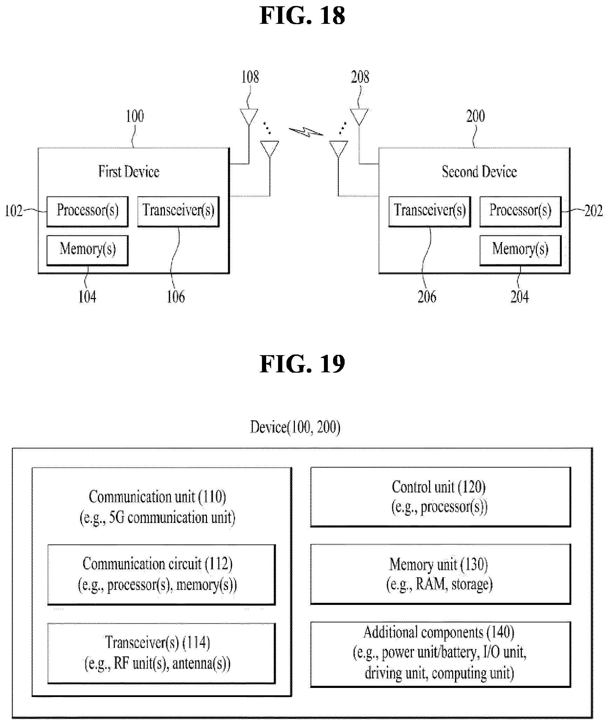

FIG. 18 illustrates wireless devices applicable to the disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates another example of a wireless device applied to the disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the handheld device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

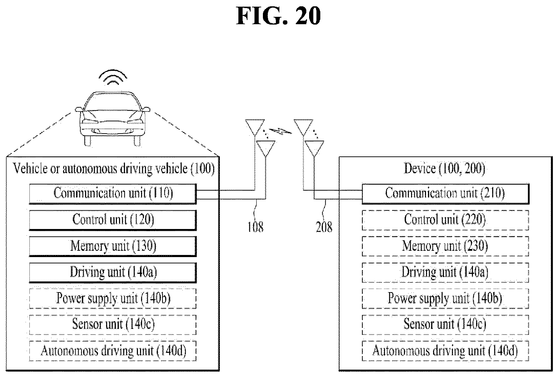

FIG. 20 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The disclosure is applicable to UEs, BSs, or other apparatuses in a wireless mobile communication system.

## Claims

1. A method performed by a user equipment (UE), the method comprising:
determining preference/non-preference of the UE for a plurality of physical cell identifiers (PCIs);
measuring M beams for each PCI based on preferred PCIs of the UE; and
transmitting a UE-initiated beam measurement report for inter-cell beam management (ICBM) based on the measurement,
wherein the UE-initiated beam measurement report is configured to comprise: measurement values of at least N beams among the M beams measured for each PCI, and reference signal identification information for the at least N beams.

2. The method of claim 1, wherein a number of the preferred PCIs is L,
wherein at least a part of a total of L * M measurement values are omitted in the UE-initiated beam measurement report, and
wherein the measurement values of the at least N beams for each PCI are not omitted and are always included in the UE-initiated beam measurement report.

3. The method of claim 1, wherein a sorting order of the measurement values of the at least N beams for each PCI in the UE-initiated beam measurement report is determined based on an average or maximum value of measurement values of the M beams for each PCI.

4. The method of claim 1, wherein the UE-initiated beam measurement report is configured based on a plurality of {measurement value, reference signal identification information} pairs.

5. The method of claim 4, wherein, among the plurality of {measurement value, reference signal identification information} pairs, measurement values included in at least one first {measurement value, reference signal identification information} pair are encoded as absolute values, and
wherein measurement values included in at least one second {measurement value, reference signal identification information} pair are encoded as differential values relative to the absolute values.

6. The method of claim 5, wherein the measurement values encoded as the absolute values comprise a highest measurement value for each PCI.

7. The method of claim 5, wherein X bits are assigned to each absolute value,
wherein Y bits are assigned to each differential value, and
wherein Y is smaller than X.

8. The method of claim 5, wherein the UE-initiated beam measurement report comprises information regarding which PCI is related to each absolute value

9. The method of claim 1, further comprising transmitting information regarding the preference/non-preference of the UE determined for the plurality of PCIs.

10. A non-transitory computer-readable recording medium having recorded thereon a program for performing the method of claim 1.

11. A device comprising:
a memory configured to store instructions; and
a processor configured to perform operations by executing the instructions,
wherein the operations of the processor comprise:
determining preference/non-preference of the device for a plurality of physical cell identifiers (PCIs);
measuring M beams for each PCI based on preferred PCIs of the device; and
transmitting a device-initiated beam measurement report for inter-cell beam management (ICBM) based on the measurement, and
wherein the device-initiated beam measurement report is configured to comprise: measurement values of at least N beams among the M beams measured for each PCI, and reference signal identification information for the at least N beams.

12. The device of claim 11, further comprising a transceiver configured to transmit or receive wireless signals under control of the processor,
wherein the device is a user equipment (UE) in a wireless communication system.

13. The device of claim 11, wherein the device is a processing device configured to control a user equipment (UE) in a wireless communication system.

14. A method performed by a base station (BS), the method comprising:
acquiring information regarding preference/non-preference of a user equipment (UE) for a plurality of physical cell identifiers (PCIs);
transmitting M beams for each PCI based on preferred PCIs of the UE; and
receiving a UE-initiated beam measurement report for inter-cell beam management (ICBM) from the UE,
wherein the UE-initiated beam measurement report comprises: measurement values of at least N beams among the M beams measured for each PCI, and reference signal identification information for the at least N beams.

15. A base station (BS) comprising:
at least one memory configured to store instructions; and
at least one processor configured to perform operations by executing the instructions,
wherein the operations of the at least one processor comprise:
acquiring information regarding preference/non-preference of a user equipment (UE) for a plurality of physical cell identifiers (PCIs);
transmitting M beams for each PCI based on preferred PCIs of the UE; and
receiving a UE-initiated beam measurement report for inter-cell beam management (ICBM) from the UE, and
wherein the UE-initiated beam measurement report comprises: measurement values of at least N beams among the M beams measured for each PCI, and reference signal identification information for the at least N beams.
